# EUROPÄISCHE PATENTSCHRIFT

(11) **EP 2 431 924 B1**
(45) Veröffentlichungstag und Bekanntmachung des Hinweises auf die Patenterteilung: **25.11.2015**
(21) Anmeldenummer: 11007507.4
(22) Anmeldetag: 14.09.2011
(51) Int. Cl.: G06K 19/067, G06K 19/06, G09F 9/30

(54) **Tragbarer Datenträger mit einem Flux-Detektor als Anzeigeelement**
Portable data carrier with a flux detector as display element
Support de données portatif doté d'un détecteur de flux comme élément d'affichage

(30) Priorität: 16.09.2010 DE 102010045569
(43) Veröffentlichungstag der Anmeldung: 21.03.2012
(73) Patentinhaber: Giesecke & Devrient GmbH, 81677 München (DE)
(72) Erfinder: Baldischweiler, Michael, 81825 München (DE); Bornschlegl, Alexander, Dr., 81735 München (DE)

(56) Entgegenhaltungen:
- US-A1- 2004 074 974
- US-A1- 2005 181 160
- US-B1- 7 481 360

## Beschreibung

Die Erfindung betrifft einen tragbaren Datenträger mit einem Datenträgerkörper und einem auf dem Datenträgerkörper angeordneten Flux-Detektor, wobei der Flux-Detektor in Abhängigkeit des Verlaufs eines auf den Datenträgerkörper einwirkenden Magnetfelds zumindest bereichsweise das einwirkende Magnetfeld sichtbar machen kann.

Flux-Detektoren werden dazu verwendet, um über einen Farb- oder Helligkeitskippeffekt magnetische Felder anzuzeigen. Als solches sind diese auch unter dem Begriff "Magnetic Viewing Paper" oder "Magnetic Viewing Film" bekannt. Diese Flux-Detektoren werden insbesondere als Flux-Folien ausgestaltet. Diese Folie weist eine sehr große Anzahl darin eingeschlossener, magnetischer Teilchen einer Trägerflüssigkeit auf. Die Suspension ist bevorzugt gallertartig. In Abhängigkeit des Verlaufs eines auf den Flux-Detektor einwirkenden Magnetfelds und aufgrund der Orientierung der magnetischen Teilchen wechselt der Flux-Detektor seine Farbe.

Der Effekt des Flux-Detektors basiert darauf, dass eine Vielzahl an winzigen Mikrokapseln, welche jeweils kleine Teilchen, beispielsweise Nickelteilchen, in einer Flüssigkeit aufweisen, in Abhängigkeit davon ausgerichtet werden, ob das von außerhalb erzeugte Magnetfeld orthogonal auf die Ebene des Flux-Detektors oder parallel dazu trifft. Trifft das Magnetfeld orthogonal auf den Flux-Detektor, richten sich die magnetischen Teilchen derart aus, dass diese nur einen geringen Teil an Licht reflektieren. Damit erscheint der Flux-Detektor dunkel. Im Gegensatz dazu fungieren die magnetischen Teilchen als kleine Spiegel, wenn sich das Magnetfeld parallel zur Ebene des Flux-Detektors erstreckt, wodurch der Flux-Detektor hell erscheint. In Abhängigkeit der Anzahl der in der Suspension befindlichen Teilchen kann somit eine sehr fein strukturierte Anzeige des Magnetfeldes erzeugt werden.

In der US 5,543,911 A1 wird ein Flux-Detektor auf einem Sicherheitsdokument als Echtheitsmerkmal verwendet, wobei ein Sicherheitsmerkmal sichtbar wird, sobald ein Magnet über den Flux-Detektor bewegt wird.

Aus der DE 10 2007 059 550 A1 ist es bekannt, reversibel ausrichtbare Magnetpartikel zur Erzeugung eines Farbkippeffekts auf Sicherheitsdokumenten zu verwenden. Ohne äußeres Magnetfeld sind hierzu verwendete Effektpigmente innerhalb ihrer Verkapselung isotrop ausgerichtet und weisen in ihrer Gesamtheit keine Vorzugsausrichtung auf. Der Sicherheitseffekt basiert auf einer Wechselwirkung, wobei die Ausprägung eines optisch variablen Effekts von der Orientierung der magnetisch ausrichtbaren Effektpigmente abhängt. Auf die Offenbarung der DE 10 2007 059 550 A1 wird hierin ausdrücklich und vollumfänglich Bezug genommen. In der DE 10 2011 015 837, angemeldet am 4. April 2011, wird ein variables Sicherheitselement zur Absicherung von Wertgegenständen mit einer optisch variablen Farbschicht beschrieben, wobei die optisch variable Farbschicht eine Vielzahl von Mikrokapseln enthält, die jeweils eine Kapselhülle, eine in der Kapselhülle eingeschlossene Trägerflüssigkeit und zumindest ein optisch variables und magnetisch ausrichtbares Pigment aufweisen. Die magnetisch ausrichtbaren Partikel sind in der Mikrokapsel im Wesentlichen frei drehbar angeordnet und durch ein äußeres Magnetfeld reversibel ausrichtbar. Auf die gesamte Offenbarung der DE 10 2011 015 837 wird hierin eindeutig Bezug genommen.

Aus der US 2005/181160 A1 ist ein Sicherheitsdokument mit einem Flux-Detektor bekannt, wobei der Flux-Detektor den Verlauf eines auf den Flux-Detektor einwirkenden Magnetfeld sichtbar machen kann. Anspruch ist gegenüber diesem Dokument abgegrenzt.

Die Flux-Detektoren werden bei den aus dem Stand der Technik bekannten Vorrichtungen zur Echtheitsüberprüfung von Sicherheitsdokumenten verwendet.

Es ist ebenfalls bekannt, Datenträger mit einem Flüssigkristalldisplay, kurz LCD, auszustatten, sodass der Datenträger über dieses LCD Daten bzw. Informationen anzeigen kann. Diese Anzeigen sind sehr teuer und erschweren den Herstellungsprozess erheblich.

Ein weiterer, die Sicherheit von Sicherheitsdokumenten, wie z.B. Chipkarten, betreffender Aspekt besteht darin, festzustellen, ob versucht wurde, die auf einem Sicherheitsdokument gespeicherten Daten auszuspionieren. Dies ist insbesondere bei solchen Sicherheitsdokumenten der Fall, welche über eine kontaktlose Kommunikationsschnittstelle verfügen. Das Ausspionieren von Daten kann beispielsweise über einen sog. Relais-Angriff erfolgen, bei dem über die kontaktlose Schnittstelle Daten aus einem Datenspeicher ausgelesen und beispielsweise zur Herstellung eines Duplikats verwendet werden. Der berechtigte Inhaber des Sicherheitsdokuments bzw. des Datenträgers hat von der "Entwendung" seiner Daten üblicherweise keine Kenntnis.

Es ist Aufgabe der vorliegenden Erfindung, einen tragbaren Datenträger anzugeben, welcher einem Nutzer auf einfache Weise eine Anzeigevorrichtung ermöglicht, wodurch einem Benutzer des Datenträgers Informationen und/oder Daten mitgeteilt werden können. In einem Spezialfall soll für den Benutzer erkennbar sein, ob sich der Datenträger in einem kontaktlosen Feld eines Lesegeräts befand.

Diese Aufgabe wird gelöst durch einen tragbaren Datenträger mit den Merkmalen des Patentanspruches 1. Vorteilhafte Ausgestaltungen sind in den abhängigen Patentansprüchen angegeben.

Die Erfindung geht von einem tragbaren Datenträger, insbesondere einer Chipkarte, mit einem Datenträgerkörper und einem auf dem Datenträgerkörper angeordneten Flux-Detektor aus. Der Flux-Detektor ist durch eine Folie oder Druckschicht mit darin eingeschlossenen, magnetischen Teilchen, insbesondere Nickel-, Eisen- oder Chromeisenteilchen, in einer gallertartigen Trägerflüssigkeit gebildet, der in Abhängigkeit des Verlauf eines auf ihn einwirkenden Magnetfelds aufgrund der Orientierung der magnetischen Teilchen seine Farbe wechselt, wodurch das Magnetfeld sichtbar gemacht werden kann. Der erfindungsgemäße tragbare Datenträger zeichnet sich dadurch aus, dass unterhalb des Flux-Detektors unterhalb des Flux-Detektors zumindest eine Spule angeordnet ist, deren Magnetfeld bei Anregung durch einen Stromfluss zu der Farbänderung des Flux-Detektors führt. Die Farbänderung ist durch eine entsprechende Anordnung auf dem Datenträgerkörper für einen Benutzer des Datenträgers sichtbar.

Als Farbänderung wird in dieser Anmeldung nicht nur das Wechseln der Farbe von einer ersten Wellenlänge des für den Menschen sichtbaren Bereichs des elektromagnetischen Spektrums zu einer zweiten Wellenlänge des elektromagnetischen Spektrums verstanden, sondern insbesondere auch das wechseln von Helligkeiten und/ oder Kontrasten des Flux-Detektors. Durch diese Farbänderung wird ein auf den Flux-Detektor einwirkendes Magnetfeld aufgrund der Orientierung der Magnetfeldlinien sichtbar. Der Begriff Farbänderung ist synonym zu den Begriffen Farbkippeffekt, Farbwechsel und Farbveränderung zu verstehen.

Bevorzugt weist die Spule einen Kern aufweist. Die Remanenz des Kerns führt nach Magnetisierung durch die Anregung der Spule zur Farbänderung des Flux-Detektors. Durch die Remanenz ist die Farbänderung für den Benutzer sichtbar.

Der Stromfluss zur Anregung der Spule wird in einer Ausgestaltung vom Datenträger selbst erzeugt. Somit ist auf dem Datenträger auf sehr einfache Weise eine Anzeigevorrichtung angeordnet. Diese Anzeigevorrichtung kann in einer Weiterbildung aus mehreren Spulen bestehen, die Spulen unterhalb des Flux-Detektors angeordnet sind. Durch gezielte geometrische Anordnung, beispielsweise in Form einer sieben Segment Anzeige, der Spulen und darüber hinaus gezielte Ansteuerung, beispielsweise einer sieben Segment-Steuerung, durch den integrierten Halbleiterchip des Datenträgers können nun verschiedene Informationen und/ oder Daten angezeigt werden. Somit können die Zahlen 0-9 sehr einfach durch Ansteuerung der Spulen als Anzeige auf dem Datenträger dargestellt werden. In einer Weiterbildung kann ein derartiges Segment nicht nur die Ziffern 0-9 sondern auch andere alphanumerische Zeichen, insbesondere die Buchstaben von A bis Z darstellen: Auch Sonderzeichen können damit dargestellt werden, wodurch diese Ausgestaltung ein vollwertiges Display darstellt.

Bevorzugt ist oberhalb der mehreren Spulen eine vollflächige Schicht des Flux-Detektor-Materials angeordnet. Alternativ ist nur in jeweils einem Bereich oberhalb der einzelnen Spulen jeweils ein Flux-Detektor pro Spule angeordnet.

Insbesondere können mehrere der Anzeigensegmente nebeneinander auf dem Datenträger dargestellt sein.

Der Stromfluss zur Anregung der Spule wird in einer alternativen Ausgestaltung durch ein von außen wirkendes Nahfeld verursacht. Bei dem Feld des Lesegerätes kann es sich beispielsweise um ein Feld eines RFID (Radio Frequency Identification)-Lesegeräts oder um ein NFC (Near Field Communication)-Feld handeln.

Durch die unterhalb des Flux-Detektors oder der Flux-Detektoren angeordnete Spule und den von der Spule umgebenen Kern wird innerhalb des tragbaren Datenträgers ein Magnetfeld erzeugt, sobald die Spule von außerhalb durch ein Feld oder intern durch den Datenträger selbst angeregt wird. Aufgrund der einleitend bereits beschriebenen Eigenschaften des Flux-Detektors geht durch das durch die Einheit aus Spule und Kern erzeugte Magnetfeld und die nach Abschalten des äußeren Feldes bzw. Abschalten der internen Ansteuerung des Datenträgers verbleibende Remanenz des Kernes eine Änderung der optischen Eigenschaften des Flux-Detektors einher. Hierdurch ist eine statische Anzeige auf dem tragbaren Datenträger realisiert, welche bereits bei geringen Energien (kleiner als 10 mWs, wie bei Lesegeräten heutzutage standardmäßig üblich) dauerhaft aktivierbar ist. Ein Nutzer des tragbaren Datenträgers kann anhand der sich ändernden Farbe des Flux-Detektors damit erkennen, ob sich der Datenträger in einem kontaktlosen Feld befand beziehungsweise erhält der Benutzer eine Anzeigevorrichtung zur Darstellugn von Information und/ oder Daten. Hierdurch kann beispielsweise der eingangs beschriebene Relais-Angriff erkannt werden. Die in der Trägerflüssigkeit eingebrachten magnetischen Teilchen haben keine Vorzugsorientierung, lediglich etwas Auftrieb in der Flüssigkeit. Der erzeugte Farbkippeffekt auf dem Flux-Detektor ist daher sehr lang anhaltend, da die Teilchen nur sehr langsam in ihre Ausgangslage zurückkehren. Schwache magnetische Streufelder können dies bei längerer Einwirkung verursachen.

Prinzipiell ist der Flux-Detektor eine Suspension, also ein Stoff mit einer Trägerflüssigkeit und darin enthaltenen magnetischen, frei-drehbaren Teilchen.

Die Farbänderung ist reversibel und kann insbesondere durch ein, dem einwirkenden Magnetfeld, orthogonales Magnetfeld rückgängig gemacht werden. Als orthogonales Magnetfeld wird ein Magnetfeld bezeichnet, dessen Magnetfeldlinien orthogonal zu den Magnetfeldlinien des einwirkenden Magnetfelds verlaufen. Alternativ wird der Stromfluss zur Anregung der Spule durch einen, in den Datenträgerkörper eingebrachten Schaltkreis verursacht. Dieser Schaltkreis ist insbesondere das in den Datenträgerkörper eingebrachte Chipmodul. Somit kann der Datenträger durch eine Ansteuerschaltung die Spule mittels Stromfluss anregen, wodurch einem Benutzer eine Information angezeigt werden kann.

Spule und Kern sind vorzugsweise im Inneren des Kartenkörpers angeordnet.

Um sicherzustellen, dass der durch das Feld des externen Lesegerätes bzw. durch den Datenträger selbst herbeigeführte Farbwechsel des Flux-Detektors dauerhaft ist und nicht durch schwache magnetische Streufelder langsam nachlässt, ist es zweckmäßig, wenn der Kern eine geringe Koerzitivfeldstärke und damit nach Anregung durch die Spule eine hohe Remanenz aufweist. Hierdurch kann der Farbwechsel beibehalten werden, da eine anisotrope Ausrichtung der magnetischen Teilchen aufgrund des weiter vorhandenen Magnetfelds, das durch die remanente Magnetisierung des Kerns erzeugt ist, andauert. Wünschenswert ist, dass die Werte für Koerzitivfeldstärke und Remanenz derart gewählt sind, dass der Farbkippeffekt am Flux-Detektor möglichst lange, insbesondere über mehrere Tage anhält, aber durch die zur Verfügung stehende Elektronik wieder aufgehoben bzw. rückgängig gemacht werden kann.

Der Kern kann wahlweise ein Weicheisenkern oder ein in Kunststoff gebundener Dauermagnet oder eine magnetische Druckfarbe sein. Als Kunststoff gebundene Dauermagnete kommen beispielsweise Hartferritpartikel oder Seltenerdmagnetpartikel, wie z.B. Neodym-Eisen-Bor oder Samarium-Cobalt-Magnetwerkstoffe, in Betracht. Wird statt eines Dauermagneten eine magnetische Druckfarbe als Kern innerhalb der Spule vorgesehen, so lässt sich der tragbare Datenträger auf besonders einfache Weise durch druckbare Verfahren herstellen.

In einer weiteren Ausgestaltung ist der Flux-Detektor, insbesondere unmittelbar, auf einem Magnetstreifen angeordnet, wobei der Magnetstreifen als Datenspeicher verwendet wird und eine im Vergleich zu dem Kern hohe koerzitive Feldstärke aufweist. Hierdurch wird erreicht, dass die durch das externe Feld gerichteten magnetischen Teilchen nicht dauerhaft durch die darunter liegende Spule "umprogrammiert" werden. Da der Magnetstreifen eine Art Dauermagnet darstellt, lässt sich mit diesem der Farbkippeffekt des Flux-Detektors über die Zeit löschen. Über das Verhältnis aus hoher Koerzitivfeldstärke des Magnetstreifens und niedriger Koerzitivfeldstärke der Spule mit Kern ist die Dauer des Farbkippeffekts wählbar. Somit kann durch diese Parameter eingestellt werden, wie lange der Farbkippeffekt des Flux-Detektors für einen Benutzer des Datenträgers sichtbar bleiben soll. Diese Zeitspanne ist demnach beliebig einstellbar und kann von wenigen Sekunden bis mehrere Tage variieren.

Ebenso ist es möglich, dass in dem Magnetstreifen ein Muster, eine Figur oder ein Zeichen einprogrammiert ist, das ohne ein auf die Spule von außen einwirkendes Feld durch den Flux-Detektor angezeigt wird. Dieser Zustand wird auch als Ruhezustand des Flux-Detektors bezeichnet. Der Magnetstreifen ist in mehrere, insbesondere drei Spuren aufgeteilt, wobei insbesondere die mittlere Spur die Taktspur ist. Beispielsweise ergibt sich durch die Magnetisierung der mittleren Spur des Magnetstreifens ein streifenförmiges Muster. Da ein durch die Spule erzeugtes Magnetfeld bei der Anregung der Spule durch ein externes Feld stärker ist als das von dem Magnetstreifen erzeugte Magnetfeld, erfolgt hierdurch der für die Anzeige erwünschte Farbwechsel bzw. Farbkippeffekt.

Der Farbwechsel des Flux-Detektors ist reversibel, indem das Magnetfeld des Magnetstreifens orthogonal ist zu dem Magnetfeld bei Anregung der Spule. Hierdurch lässt sich - nicht schlagartig, jedoch über die Zeit, nachdem das externe Feld nicht mehr auf die Spule einwirkt - der Farbkippeffekt bzw. der Farbwechsel wieder löschen, so dass die in dem Flux-Detektor enthaltenen magnetischen Teilchen wieder ohne Vorzugsrichtung ausgerichtet sind, sofern durch den Magnetstreifen nicht ein anderweitiges Muster oder eine Figur oder ein Zeichen erzeugt wird.

In einer weiteren Ausgestaltung ist die Spule mit einer Anzahl an Kondensatoren unterschiedlicher elektrischer Kapazität parallel geschaltet, wobei in Abhängigkeit einer in dem Datenträger gespeicherten Information, insbesondere eines monetären Werts, die Spule mit einem der Information zugeordneten Kondensator angeregt wird. Aufgrund der jeweils unterschiedlichen Ladung wird ein unterschiedlich großer Farbwechsel oder Farbkippeffekt erzeugt. Je größer der Kondensator ist, desto größer ist der Farbwechsel bzw. Kippeffekt des Flux-Detektors. Beispielsweise kann in einer entsprechenden Skalierung, die ringförmig ausgebildet sein kann, ein Kontostand oder ähnliches angezeigt werden. Aufgrund der hohen Anzahl an metallischen Teilchen ist eine sehr feine Struktur erzeugbar.

Das Löschen des Flux-Detektors ist auch mittels eines Dauermagneten, insbesondere in U-Form, oder mit einem externen Elektromagneten durchführbar, dessen Magnetfeldlinien zu den Magnetfeldlinien der Spule und des Kerns orthogonal verlaufen. Hierdurch ist es möglich, dass der Nutzer des tragbaren Datenträgers den Flux-Detektor selbsttätig in seinen Ruhezustand versetzt, beispielsweise nachdem er den tragbaren Datenträger bestimmungsgemäß für eine Transaktion oder dergleichen verwendet hat.

Um den Farbwechsel gut erkennen zu können, ist es zweckmäßig, wenn die dem Kartenkörper zugewandte Folienseite eingefärbt ist. Hierdurch lassen sich Farbunterschiede - je nach Richtung des Magnetfelds - besser voneinander unterscheiden.

In einer weiteren Ausgestaltung werden in die Folie des Flux-Detektor zusätzlich magnetischen Partikeln, insbesondere Dauermagnetpartikeln, eingebracht. Bei einer kontaktlosen Nahfeldtransaktion, während der ein Benutzer den Datenträger in ein Magnetfeld bewegt, wird aufgrund der Spule im Datenträgerkörper der Flux-Detektor angeregt. Durch das einwirkende Magnetfeld und der kleinen Magnetpartikel im Flux-Detektor wird nun ein quasi dynamisches Farbkippen erzeugt. Dem Benutzer wird somit angezeigt, dass eine Nahfeld-Transaktion durchgeführt wird.

In einer besonderen Ausgestaltung sind zusätzlich zu den Dauermagnetpartikeln noch glitzernde Partikel in den Flux-Detektor eingebracht. Somit wird ein quasi-dynamischer Glitzereffekt erzeugt.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Fig. 1: eine schematische Darstellung eines erfindungsgemäßen tragbaren Datenträgers im Querschnitt,
- Fig. 2: eine exemplarische Verschaltung einer in einem erfindungsgemäßen Datenträger vorgesehenen Spule,
- Fig. 3: eine beispielhafte Beschaltung mehrere Spulen unterhalb des Flux-Detektors mittels eines integrierten Halbleiterchips,
- Fig. 4: eine zu Figur 3 alternative Anordnungen der mehreren Spulen.

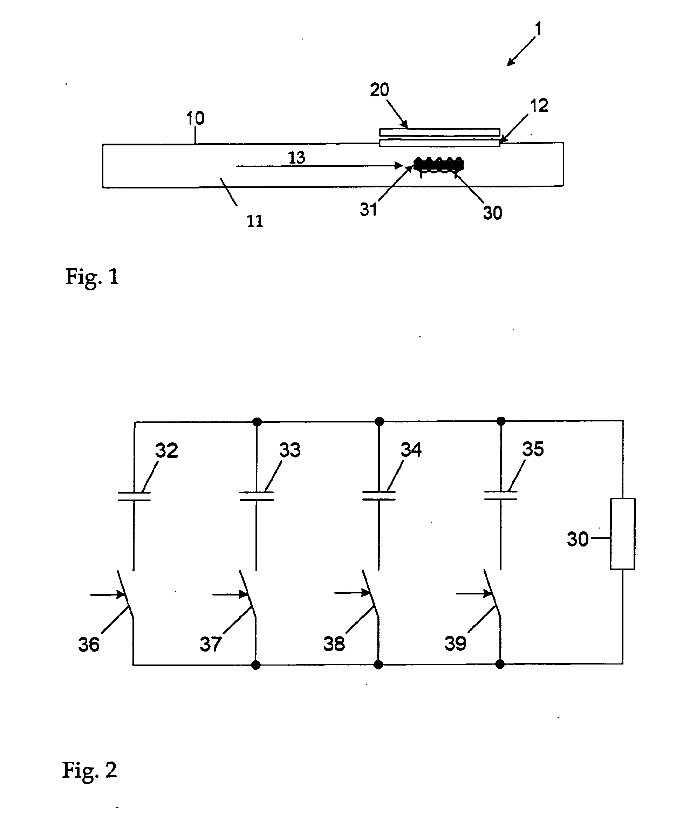

Der in Fig. 1 in einem Querschnitt dargestellte tragbare Datenträger 1 weist einen Kartenkörper 10 auf, der auf seiner Oberfläche einen sog. Flux-Detektor 20 umfasst. Der Flux-Detektor 20 bildet eine statische Anzeige auf dem Datenträger 1 aus, welche mit einfachen Verfahren, beispielsweise einem Druckverfahren, herstellbar ist und mit einer geringen Energie aktiviert werden kann. Zur Aktivierung der Anzeige ist eine Energie von weniger als 10 mWs notwendig. Der Fluxdetektor ist während eines Laminiervorgangs in den Datenträger 1 eingebracht. Alternativ kann der Flux-Detektor während eines Druckprozesses in den Datenträger 1 eingebracht werden.

Der Flux-Detektor 20 ermöglicht die Sichtbarmachung von Magnetfeldern. Bei dem Flux-Detektor handelt es sich um eine Folie mit darin eingeschlossenen magnetischen Teilchen, insbesondere Eisen und Chromeisenteilchen. in einer Trägerflüssigkeit. Auch die Verwendung von Nickelteilchen ist möglich. Zur Ausgestaltung des Flux-Detektors wird auch auf die Offenbarung in der DE 10 2007 059 550 A1 bzw. der DE 10 2011 015 837 hingewiesen. Sofern kein Magnetfeld auf die magnetischen Teilchen einwirkt und in der Vergangenheit eingewirkt hat, sind diese in der Folie, die vorzugsweise auf ihrer dem Kartenkörper 10 zugewandeten Seite eingefärbt ist, ohne Vorzugsrichtung angeordnet. Der Flux-Detektor 20 wechselt seine Farbe in Abhängigkeit des Verlaufs eines auf ihn einwirkenden Magnetfelds. Bewirkt wird dies durch die durch das Magnetfeld verursachte Orientierung der magnetischen Teilchen. Der Flux-Detektor 20 färbt sich beispielsweise dunkel, wenn das auf diesen einwirkende Magnetfeld rechtwinklig zur Folie ist. Er färbt sich hell, wenn das Magnetfeld parallel zur Folie des Flux-Detektors verläuft. Dieses Verhalten wird als Farbkippeffekt oder Farbänderung bezeichnet.

Unterhalb des Flux-Detektors 20 ist im Inneren des Kartenkörpers 10 ein von einer Spule 30 umgebener Kern 31 angeordnet. Bei einer Anregung der Spule 30 durch ein externes Feld, beispielsweise eines RFID-Lesegerätes oder eines NFC-Lesegerätes, oder einen Stromfluss, ausgelöst von einem integrierten Halbleiterchip des Datenträger wird die Spule 30 angeregt, wodurch die Anordnung aus Spule 30 und Kern 31 ein durch den Flux-Detektor 20 detektierbares Magnetfeld erzeugt. Weist der Kern 31, der als Weicheisenkern oder als ein in Kunststoff gebundener Dauermagnet oder durch eine magnetische Druckfarbe gebildet ist, eine geringe Koerzitivfeldstärke auf, so hat dieser nach Anregung durch die Spule 30 eine hohe Remanenz, welche durch den Flux-Detektor 20 auch nach Entfall der Anregung der Spule (d.h. auch ohne das externe Feld) sichtbar gemacht wird.

Soll ein Aufenthalt des Datenträgers in einem externen Feld dauerhaft durch den Flux-Detektor angezeigt werden, so ist der in der Spule 30 angeordnete Spulenkern 31 vorzugsweise aus einem dauermagnetischen Material mit niedriger Koerzitivfeldstärke vorzusehen. Eine derartige Ausgestaltung erlaubt zu einem späteren Zeitpunkt eine visuelle Erkennung eines kontaktlosen Zugriffs, beispielsweise im Rahmen einer Relais-Attacke.

Auch bei einer gewollten kontaktlosen Transaktion durch weitere, in der schematischen Darstellung der Fig.1 nicht gezeigten Elemente des Datenträgers wird dann das dauermagnetische Material des Kerns 31 so magnetisiert, dass das Magnetfeld senkrecht gerichtet ist zu dem Flux-Detektor, wodurch der Farbkippeffekt erzeugt wird. Das Zurücksetzen der dauerhaften "Anzeige" der kontaktlosen Transaktion kann beispielsweise mit Hilfe eines U-förmigen Magneten oder einer Anordnung aus Magneten und Spulen erfolgen, welche ein Magnetfeld erzeugen, das parallel zur Ebene des Flux-Detektors ausgerichtet ist, wodurch die magnetischen Teilchen in dem Flux-Detektor 20 wieder eine isotrope Ausrichtung annehmen.

Der Wechsel der Farbe des Flux-Detektors 20 in seinen Ursprungszustand kann auch durch den im Ausführungsbeispiel optionalen Magnetstreifen 12 bewirkt werden. Der Magnetstreifen 12 ist dabei unmittelbar unterhalb des Flux-Detektors 20 angeordnet und kommt somit zwischen der Anordnung aus Spule 30 und Kern 31 und dem Flux-Detektor 20 zum Liegen. Der Magnetstreifen 12 entspricht z.B. dem Magnetstreifen, der in bekannten tragbaren Datenträgern als Datenspeicher eingesetzt wird. Der Magnetstreifen 12 weist eine hohe Koerzitivfeldstärke auf, wodurch die in dem Magnetstreifen 12 befindlichen, gerichteten magnetischen Teilchen durch die Anordnung aus Spule 31 und Kern 30 nicht dauerhaft umprogrammiert werden können. Durch den Magnetstreifen 12 mit im Vergleich höherer Koerzitivfeldstärke als der Anordnung aus Spule und Kern lässt sich der Flux-Detektor 20 mit der Zeit in seinen Ursprungszustand zurückversetzen.

Im Ruhe- oder Ursprungszustand nimmt der Flux-Detektor 20 den magnetischen Verlauf des direkt darunter liegenden Magnetstreifens an. Ist der Magnetstreifen 12 horizontal programmiert, so dass die Magnetfeldlinien parallel zur Ebene des Flux-Detektors verlaufen, so richten sich die magnetischen Teilchen in der Folie des Flux-Detektors 20 derart aus, dass diese als Reflektor wirken. Je nach Farbausbildung kann hier eine erste Farbdarstellung erfolgen. Der unterhalb des Magnetstreifens 12 angeordnete Magnet aus Spule 30 und Kern 31 hat eine wesentlich höhere Magnetfeldstärke, so dass dieser mit Hilfe der Spule 30 vertikal programmiert werden kann, so dass die Magnetfeldlinien senkrecht zur Ebene des Flux-Detektors stehen. Hierdurch richten sich die magnetischen Teilchen innerhalb des Flux-Detektors senkrecht (zur Ebene des Flux-Detektors) auf. Somit wird die darunter liegende Farbe der Folie, welche beispielsweise schwarz ist, sichtbar.

Die Spule 30, wie beschrieben, wird von dem externen kontaktlosen Feld angesteuert. Jedes Mal, wenn der Datenträger 1 in das Feld gehalten wird, wird ein senkrechtes Feld von der Spule und dem Kern 31 erzeugt. Dieses Feld stellt in beschriebener Weise die magnetischen Teilchen derart auf, dass diese senkrecht zur Ebene des Flux-Detektors stehen, wodurch die dem Kartenkörper 10 zugewandte Farbe des Flux-Detektors sichtbar wird. Wird das Feld abgeschaltet, richten sich die Teilchen wieder nach dem statischen Feld des Magnetstreifens aus, sofern der Kern 31 innerhalb der Spule 30 kein Dauermagnet ist.

Es ist möglich, in den Magnetstreifen 12 ein Muster, eine Figur oder ein Zeichen einzuprogrammieren, welches im Ruhezustand angezeigt wird. Somit dient der Flux-Detektor in Verbindung mit dem Magnetstreifen auch als Echtheitsmerkmal.

Der Flux-Detektor kann auch verwendet werden, um für einen Benutzer Informationen anzuzeigen. Hierbei wird die Spule (30) mittels eines im Datenträger vorhanden integrierten Schaltkreises, vorzugsweise dem Chipmodul durch Stromfluss angeregt. Beispielsweise sorgt eine Ansteuereinheit im Chipmodul für das Beschalten der Spule mit einem definierten Strom, sodass das entstehende Magnetfeld auf den Flux-Detektor einwirkt und der Farbkippeffekt entsteht. Dieser Farbkippeffekt ist für einen Benutzer sichtbar und kann als Information ausgewertet werden.

Der Flux-Detektor 20 kann in Verbindung mit der Anordnung aus Spule 30 und Kern 31 auch als reversible Anzeige eines Kontostands auf einer als Geldkarte ausgebildetem Datenträger verwendet werden. Hierzu wird, wie dies schematisch in Fig. 2 dargestellt ist, die Spule 30 mit verschiedenen Ladekondensatoren 32, 33, 34, 35 parallel geschaltet, wobei die Kondensatoren 32,33,34,35 unterschiedliche elektrische Kapazitäten, z.B. 10 µF, 1 µF, 100 nF, etc., aufweisen. In Abhängigkeit des Kontostands wird die Spule mit einem oder einer Auswahl der Ladekondensatoren angeregt, wobei der jeweils in Serie mit dem betreffenden Kondensator vorgesehene Schalter 36, 37, 38, 39 angesteuert, d.h. geschlossen, wird. Aufgrund der jeweils unterschiedlichen Ladung wird ein unterschiedlich starker Farbwechsel, aufgrund des unterschiedlich starken Kippens der magnetischen Teilchen erzeugt. Grundsätzlich gilt, je größer der Kondensator ist, desto größer ist der Kippeffekt der magnetischen Teilchen des Flux-Detektors 20. Beispielsweise kann in einer entsprechenden Skalierung, die ring- oder balkenförmig ausgebildet sein kann, der Kontostand ähnlich einer Füllstandsanzeige angezeigt werden.

Darüber hinaus kann der Flux-Detektor in Verbindung mit der darunter angeordneten Anordnung aus Spule und Kern als eine Art Sicherheitselement oder Echtheitsmerkmal verwendet werden. Die Verwendung einer Vielzahl von als Dauermagneten ausgebildeten Kernen mit einem "Glitzereffekt" sorgt bei einer Kommunikation in dem externen Feld für ein dynamisches Kippen der magnetischen Teilchen des Flux-Detektors. Hierdurch entsteht ein "wabernder" Effekt, welcher durch die in dem Flux-Detektor zusätzlich zu den magnetischen Teilchen angeordneten Glitzerpartikel verstärkt werden kann.

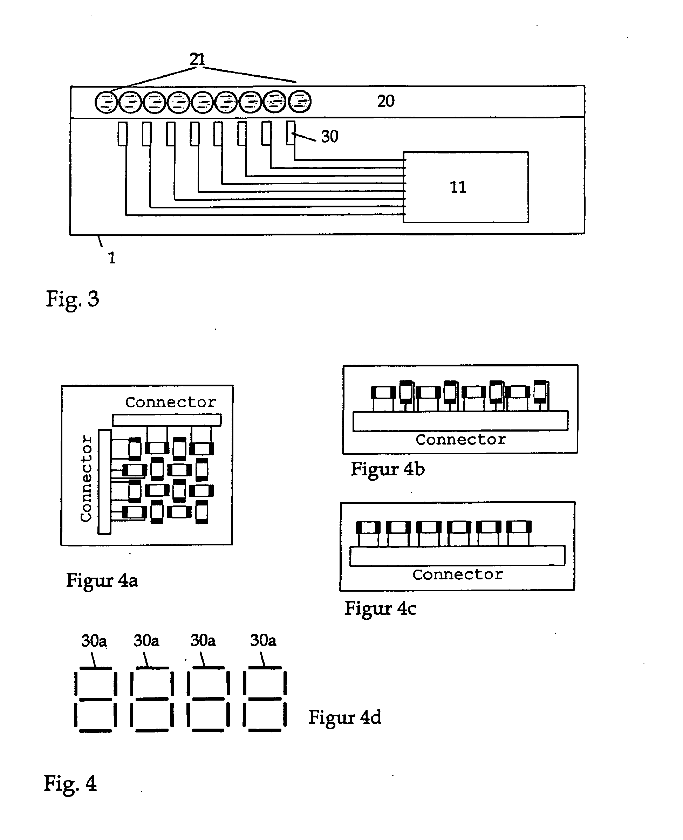

Gemäß Figur 3 ist Datenträger 1 mit einem integrierten Halbleiterchip 11 dargestellt. Der Flux-Detektor 20 ist für einen Benutzer sichtbar auf dem Datenträger 1 angeordnet. Mittels elektrischer Ansteuerungen werden nun mehrere Spulen 30 angesteuert, wobei die Spulen unterhalb des Fluxdetektors 20 bestehend aus einer Suspension 21 mit Trägerflüssigkeit und Mikropartikeln angeordnet sind. Die Anordnung der Spulen ist hier seriell, sodass alle Spulen 30 in einer Reihe angeordnet sind.

In Figur 4 sind drei alternative Anordnungen der Spulen 30 in Draufsicht dargestellt. In Figur 4a sind die Spulen in einem zweidimensionalen Array angeordnet, wodurch verschiedenste alphanumerische Zeichen dargestellt werden können. In Figur 4b ist lediglich die Orientierung jeder zweiten Spule 30 um 90Grad versetzt. In Figur 4c sind alle Spulen 30 gleich angeordnet. Die Spulendimensionen sind beispielsweise Länge = 0,6mm, Breite = 0,3mm, Höhe = 0,3mm, sodass diese sehr einfach im Datenträgerkörper integriert werden können. Alternativ sind die Spulendimensionen: Länge = 1,0mm, Breite = 0,5mm, Höhe = 0,32mm. Die Spulen können auch in beliebigen Matrixformen, Linien oder Balkenformen angeordnet sein. Bevorzugt ist die Anordnung gemäß Figur 4d als Sieben Segment Element 30a, wobei auch mehrere Sieben Segment Elemente 30a nebeneinander auf dem Datenträger angeordnet sein können.

### Bezugszeichenliste

- 1: Datenträger
- 10: Kartenkörper
- 11: Eingebrachter Schaltkreis, integrierter Halbleiterchip
- 12: Magnetstreifen
- 13: elektrische Ansteuerung
- 20: Flux-Detektor
- 21: Suspension aus Trägerflüssigkeit und Mikropartikel
- 30: Spule
- 30a: Mehrere Spulen in 7-Segment Anordnung
- 31: Kern
- 32: Kondensator
- 33: Kondensator
- 34: Kondensator
- 35: Kondensator
- 36: Schaltelement
- 37: Schaltelement
- 38: Schaltelement
- 39: Schaltelement

## Patentansprüche

1. Tragbarer Datenträger (1), insbesondere Chipkarte, mit einem Datenträgerkörper und einem für einen Benutzer des Datenträgers sichtbar angeordneten Flux-Detektor (20), wobei der Flux-Detektor (20) eine Suspension mit darin eingeschlossenen, magnetischen Teilchen ist und wobei der Flux-Detektor (20) in Abhängigkeit des Verlaufs eines auf ihn einwirkenden Magnetfelds zumindest bereichsweise das einwirkende Magnetfeld durch Änderung der Orientierung der magnetischen Teilchen des Flux-Detektors (20) sichtbar machen kann, **dadurch gekennzeichnet, dass** unterhalb des Flux-Detektors (20) zumindest eine Spule (30) angeordnet ist, deren Magnetfeld bei Anregung durch einen Stromfluss zu der Änderung der Orientierung der magnetischen Teilchen des Flux-Detektors (20) führt.

2. Tragbarer Datenträger nach Anspruch 1, **dadurch gekennzeichnet, dass** die Spule (30) einen Kern (31) aufweist und wobei die Remanenz des Kerns (31) nach Magnetisierung durch die Anregung der Spule (30) zur Änderung der Orientierung der magnetischen Teilchen des Flux-Detektor (20) führt.

3. Tragbarer Datenträger nach einem der vorhergehenden Ansprüche, **dadurch gekennzeichnet, dass** ein von außen auf den Datenträger (1) einwirkendes magnetische Feld, insbesondere ein Nahfeld eines Lesegeräts, den Stromfluss zur Anregung der Spule (30) verursacht.

4. Tragbarer Datenträger nach Anspruch 1 oder 2, **dadurch gekennzeichnet, dass** ein in den Datenträgerkörper eingebrachter Schaltkreis (11), insbesondere das Chipmodul des Datenträgers, den Stromfluss zur Anregung der Spule (30) verursacht.

5. Tragbarer Datenträger nach Anspruch 4, **dadurch gekennzeichnet, dass** mehrere Spulen (30) im Datenträger (1) angeordnet sind, wobei jede Spule (30) individuell anregbar ist, sodass verschiedene alphanumerische Zeichen mit einer Anordnung darstellbar sind.

6. Tragbarer Datenträger nach einem der vorhergehenden Ansprüche, **dadurch gekennzeichnet, dass** der Flux-Detektor (20) eine Schicht, insbesondere eine Folien- oder Druckschicht, aus einer Suspension ist, wobei die Suspension frei drehbare, magnetische Teilchen enthält und der Flux-Detektor (20) aufgrund der Orientierung der magnetischen Teilchen seine Farbe ändert, wodurch das einwirkende Magnetfeld sichtbar gemacht werden kann.

7. Datenträger nach einem der vorhergehenden Ansprüche, **dadurch gekennzeichnet, dass** die Spule (30) und der Kern (31) im Inneren des Datenträgerkörpers angeordnet sind.

8. Datenträger nach einem der Ansprüche 2 bis 6, **dadurch gekennzeichnet, dass** der Kern (31) eine geringe Koerzitivfeldstärke und nach Magnetisierung durch die Anregung der Spule (30) eine hohe Remanenz aufweist.

9. Datenträger nach einem der Ansprüche 2 bis 7, **dadurch gekennzeichnet, dass** der Kern (31) ein Weicheisenkern, ein Hart- oder Weichferritkern, ein ins Kunststoff gebundener Dauermagnet oder eine magnetische Druckfarbe ist.

10. Datenträger nach einem der vorhergehenden Ansprüche, **dadurch gekennzeichnet, dass** die Farbänderung des Flux-Detektors (20) mittels eines Dauermagneten, insbesondere in U-Form, oder einem externen Elektromagneten reversibel gemacht ist, wobei die Magnetfeldlinien des Dauermagneten zu den Magnetfeldlinien der Spule (30) und des Kerns (31) orthogonal verlaufen.

11. Datenträger nach einem der vorhergehenden Ansprüche, **dadurch gekennzeichnet, dass** der Flux-Detektor (20), insbesondere unmittelbar, auf einem Magnetstreifen (12) angeordnet ist, wobei der Magnetstreifen (12) als Datenspeicher verwendet wird und eine im Vergleich zu dem Kern (31) hohe Koerzitivfeldstärke aufweist.

12. Datenträger nach Anspruch 9, **dadurch gekennzeichnet, dass** die Farbänderung des Flux-Detektors (20) reversibel ist, indem der Flux-Detektor (20) einem, zum Magnetfeld durch Anregung der Spule (30), orthogonales Magnetfeld, insbesondere dem Magnetfeld des Magnetstreifens (12), ausgesetzt wird, dessen Magnetfeldlinien zu den Magnetfeldlinien durch Anregung der Spule (30) und des Kerns (31) orthogonal verlaufen.

13. Datenträger nach einem der vorhergehenden Ansprüche, **dadurch gekennzeichnet, dass** die Spule (31) mit einer Anzahl an Kondensatoren (32,33, 34, 35) unterschiedlicher elektrischer Kapazität parallel geschaltet ist, wobei in Abhängigkeit einer in dem Datenträger gespeicherten Information, insbesondere eines monetären Werts, die Spule (31) mit einem der Information zugeordneten Kondensator angeregt wird.

14. Datenträger nach einem der vorhergehenden Ansprüche, **dadurch gekennzeichnet, dass** der Flux-Detektor (20) zusätzlich Dauermagnetpartikel und/oder glitzernde Partikel aufweist, sodass bei einer Nahfeldtransaktion ein quasi-dynamischer Farbkippffekt erzeugt ist.

15. Verfahren zum Anzeigen eines Magnetfeldes auf einem Datenträger nach Anspruch 1 mit den Verfahrensschritten:
- Anregen einer Spule (30) im Datenträgerkörper mittels Stromfluss;
- Erzeugen eines Magnetfelds aufgrund der Anregung der Spule (30);
- Anzeigen des erzeugten Magnetfelds mittels Flux-Detektor (20), wobei der Fluxdetektor eine Suspension mit darin enthaltenen magnetischen, freidrehbaren Teilchen ist und wobei die Teilchen sich aufgrund des erzeugten Magnetfeldes orientieren, was zu einer Farbänderung des Flux-Detektors (20) führt.

## Claims

1. A portable data carrier (1), in particular a chip card, with a data carrier body and a flux detector (20) arranged to be visible to a user of the data carrier, wherein the flux detector (20) is a suspension with magnetic particles enclosed therein and wherein the flux detector (20), in dependence on the extension of a magnetic field acting on it, can make the acting magnetic field visible at least regionally by a change of the orientation of the magnetic particles of the flux detector (20), **characterized in that** below the flux detector (20) at least one coil (30) is arranged, the magnetic field of which, upon excitation by a current flow, leads to the change of the orientation of the magnetic particles of the flux detector (20).

2. The portable data carrier according to claim 1, **characterized in that** the coil (30) has a core (31) and wherein the remanence of the core (31) after magnetization by the excitation of the coil (30) leads to the change of the orientation of the magnetic particles of the flux detector (20).

3. The portable data carrier according to any of the preceding claims, **characterized in that** a magnetic field acting on the data carrier (1) from the outside, in particular a near field of a reading device, causes the current flow for the excitation of the coil (30).

4. The portable data carrier according to claim 1 or 2, **characterized in that** a circuit (11) incorporated in the data carrier body, in particular the chip module of the data carrier, causes the current flow for the excitation of the coil (30).

5. The portable data carrier according to claim 4, **characterized in that** several coils (30) are arranged in the data carrier (1), wherein each coil (30) can be excited individually, such that different alphanumerical characters can be represented with an arrangement.

6. The portable data carrier according to any of the preceding claims, **characterized in that** the flux detector (20) is a layer, in particular a foil layer or printed layer, of a suspension, wherein the suspension contains freely rotatable, magnetic particles and the flux detector (20) changes its color due to the orientation of the magnetic particles, whereby the acting magnetic field can be made visible.

7. The data carrier according to any of the preceding claims, **characterized in that** the coil (30) and the core (31) are arranged on the inside of the data carrier body.

8. The data carrier according to any of the claims 2 to 6, **characterized in that** the core (31) has a low coercive field strength and a high remanence after magnetization by the excitation of the coil (30).

9. The data carrier according to any of the claims 2 to 7, **characterized in that** the core (31) is a soft iron core, a hard or soft ferrite core, a permanent magnet bound in plastic or a magnetic printing ink.

10. The data carrier according to any of the preceding claims, **characterized in that** the color change of the flux detector (20) is made reversible by means of a permanent magnet, in particular in U-shape, or an external electromagnet, whereby the magnetic field lines of the permanent magnet extend orthogonally to the magnetic field lines of the coil (30) and the core (31).

11. The data carrier according to any of the preceding claims, **characterized in that** the flux detector (20) is arranged, in particular immediately, on a magnetic strip (12), wherein the magnetic strip (12) is utilized as a data memory and has a high coercive field strength in comparison to the core (31).

12. The data carrier according to claim 9, **characterized in that** the color change of the flux detector (20) is reversible by subjecting the flux detector (20) to a magnetic field that is orthogonal to the magnetic field by excitation of the coil (30), in particular the magnetic field of the magnetic strip (12), the magnetic field lines of which extend orthogonally to the magnetic field lines by excitation of the coil (30) and the core (31).

13. The data carrier according to any of the preceding claims, **characterized in that** the coil (31) is connected in parallel to a number of capacitors (32, 33, 34, 35) of different electrical capacity, wherein, in dependence on an information item stored in the data carrier, in particular a monetary value, the coil (31) is excited with a capacitor allocated to the information item.

14. The data carrier according to any of the preceding claims, **characterized in that** the flux detector (20) additionally has permanent-magnet particles and/or glittering particles, such that upon a near field transaction a quasi-dynamic color-shift effect is produced.

15. A method for displaying a magnetic field on a data carrier according to claim 1, having the method steps of:
- exciting a coil (30) in the data carrier body by means of current flow;
- producing a magnetic field due to the excitation of the coil (30);
- displaying the produced magnetic field by means of a flux detector (20), wherein the flux detector is a suspension with magnetic, freely rotatable particles contained therein, and wherein the particles orient themselves due to the produced magnetic field, which leads to a color change of the flux detector (20).

## Revendications

1. Support de données (1) portable, en particulier carte à puce, ayant un corps de support de données et un détecteur de flux (20) agencé de manière visible pour un utilisateur du support de données, le détecteur de flux (20) étant une suspension dotée de particules magnétiques y étant enfermées, et le détecteur de flux (20) pouvant rendre visible au moins en certaines zones, en fonction de la courbe d'un champ magnétique agissant sur lui, le champ magnétique agissant, par modification de l'orientation des particules magnétiques du détecteur de flux (20), **caractérisé en ce que**, en dessous du détecteur de flux (20), au moins une bobine (30) est agencée, dont le champ magnétique, en cas d'excitation par un flux de courant, entraîne une modification de l'orientation des particules magnétiques du détecteur de flux (20).

2. Support de données portable selon la revendication 1, **caractérisé en ce que** la bobine (30) comporte un noyau (31), et la rémanence du noyau (31) entraînant, après magnétisation par l'excitation de la bobine (30), la modification de l'orientation des particules magnétiques du détecteur de flux (20).

3. Support de données portable selon une des revendications précédentes, **caractérisé en ce qu'**un champ magnétique agissant de l'extérieur sur le support de données (1), en particulier un champ proche d'un appareil de lecture, engendre le flux de courant pour l'excitation de la bobine (30).

4. Support de données (1) portable selon la revendication 1 ou 2, **caractérisé en ce qu'**un circuit (11) incorporé dans le corps de support de données, en particulier le module puce du support de données, engendre le flux de courant pour l'excitation de la bobine (30).

5. Support de données portable selon la revendication 4, **caractérisé en ce que** plusieurs bobines (30) sont agencées dans le support de données (1), chaque bobine (30) étant individuellement excitable, de telle sorte que différents caractères alphanumériques sont représentables avec un agencement.

6. Support de données portable selon une des revendications précédentes, **caractérisé en ce que** le détecteur de flux (20) est une couche, en particulier une couche de film ou une couche imprimée, en une suspension, la suspension contenant des particules magnétiques tournant librement, et le détecteur de flux (20) changeant de couleur en raison de l'orientation des particules magnétiques, ce par quoi le champ magnétique agissant peut être rendu visible.

7. Support de données selon une des revendications précédentes, **caractérisé en ce que** la bobine (30) et le noyau (31) sont agencés à l'intérieur du corps de support de données.

8. Support de données selon une des revendications de 2 à 6, **caractérisé en ce que** le noyau (31) présente une faible intensité de champ coercitif et, après magnétisation par l'excitation de la bobine (30), une forte rémanence.

9. Support de données selon une des revendications de 2 à 7, **caractérisé en ce que** le noyau (31) est un noyau en fer doux, un noyau en ferrite dure ou douce, un aimant permanent noyé dans de la matière plastique ou une encre d'impression magnétique.

10. Support de données selon une des revendications précédentes, **caractérisé en ce que** le changement de couleur du détecteur de flux (20) est rendu réversible au moyen d'un aimant permanent, en particulier en forme de U, ou d'un électro-aimant externe, les lignes de champ magnétique de l'aimant permanent étant orthogonales par rapport aux lignes de champ magnétique de la bobine (30) et du noyau (31).

11. Support de données selon une des revendications précédentes, **caractérisé en ce que** le détecteur de flux (20) est, en particulier directement, agencé sur une piste magnétique (12), la piste magnétique (12) étant utilisée comme mémoire de données et présentant une intensité de champ coercitif élevée en comparaison avec le noyau (31).

12. Support de données selon la revendication 9, **caractérisé en ce que** le changement de couleur du détecteur de flux (20) est réversible, ce qui est obtenu par le fait que le détecteur de flux (20) est exposé à un champ magnétique orthogonal au champ magnétique par excitation de la bobine (30), en particulier au champ magnétique de la piste magnétique (12), dont les lignes de champ magnétique sont orthogonales par rapport aux lignes de champ magnétique par excitation de la bobine (30) et du noyau (31).

13. Support de données selon une des revendications précédentes, **caractérisé en ce que** la bobine (31) est branchée en parallèle avec un nombre de condensateurs (32, 33, 34, 35) de capacité électrique différente, cependant que, en fonction d'une information mémorisée dans le support de données, en particulier d'une valeur monétaire, la bobine (31) est excitée par un condensateur associé à l'information.

14. Support de données selon une des revendications précédentes, **caractérisé en ce que** le détecteur de flux (20) comporte en outre des particules d'aimant permanent et/ou des particules scintillantes, de telle sorte que, lors d'une transaction en champ proche, un effet de changement des couleurs par basculement quasi-dynamique est généré.

15. Procédé d'affichage d'un champ magnétique sur un support de données selon la revendication 1, ayant les étapes de procédé suivantes :
- excitation d'une bobine (30) dans le corps de support de données au moyen d'un flux de courant;
- génération d'un champ magnétique en raison de l'excitation de la bobine (30);
- affichage, au moyen du détecteur de flux (20), du champ magnétique généré, le détecteur de flux étant une suspension dotée de particules magnétiques tournant librement y étant contenues, et les particules s'orientant en raison du champ magnétique généré, ce qui entraîne un changement de couleur du détecteur de flux (20).
